# EUROPEAN PATENT SPECIFICATION

(11) **EP 2 311 181 B1**
(45) Date of publication and mention of the grant of the patent: **27.01.2016**
(21) Application number: 09772565.9
(22) Date of filing: 06.07.2009
(51) Int. Cl.: H02P 1/44, H02P 4/00

(54) **A MOTOR**
MOTOR
MOTEUR

(30) Priority: 04.07.2008 TR 200804967
(43) Date of publication of application: 20.04.2011
(73) Proprietor: Arçelik Anonim Sirketi, 34950 Istanbul (TR)
(72) Inventor: YUCE, Ahmet Ihsan, 34950 Istanbul (TR)
(86) International application number: PCT/EP2009/058495
(87) International publication number: WO 2010/000865

(56) References cited:
- EP-A- 1 569 325
- EP-A- 1 638 198
- US-A1- 2007 114 964

## Description

The present invention relates to a refrigerator with a motor whereof the energy consumption is reduced.

In state of the art motor embodiments, particularly in compressor motors in the refrigeration systems of cooling devices, a PTC (Positive Temperature Coefficient) thermistor, a circuit element whose internal resistance increases with the increase in temperature, connected to the auxiliary winding of the motor and a capacitor connected in parallel to the PTC are provided. When the motor is energized, the PTC short circuits the capacitor and deactivates it since the resistance of the PTC is much smaller than the impedance of the capacitor connected in parallel thereto.

Accordingly, the auxiliary winding operates as if directly connected with a resistor to the mains during the start-up of the motor. After the start-up when the motor operates normally, the PTC is heated due to the current passing therethrough and the resistance increases. When the resistance goes over a certain value, the capacitor starts to react and the PTC is deactivated. When the start-up is completed, the PTC is not required anymore. However, since the PTC is always connected to the circuit, approximately 2W of power is consumed on the PTC after the start-up. Moreover, this increases the energy consumption of the motor and the cooling device.

Various methods have been devised in the state of the art for lowering the energy consumption of the motor by reducing the power consumption on the PTC after the start-up of the motor.

In the state of the art European Patent Application No EP0571956, a motor control circuit is explained wherein a PTC element and a triac are connected in series with the auxiliary windings. The triac is controlled by a trigger circuit. Accordingly, the voltage of the triac is reduced after a predetermined time period has elapsed since the start of the motor by means of the trigger circuit thus turning off the triac and current is prevented from passing through the PTC element.

In this embodiment, the PTC is deactivated within a predetermined time period regardless of the environmental conditions. However, the mains voltage can exhibit variability depending on the geographical position, time, location, the amount of electric consumption and the energy sources of the country. The motor characteristics can also change depending on the mains voltage. This can cause variability in the time it takes for the start-up of the motor and hence the activation duration of the PTC. Turning the PTC off after a "predetermined time period" explained in the prior technique can cause consumption of more energy by the PTC being active for an unnecessarily long time in some cases when the mains voltage is variable or the PTC being deactivated prematurely and the motor not being able to start-up in some other cases.

The EP 1 569 325 relates to a motor comprising a switch, a switching element, a control unit and a PTC element. The control unit only controls the switching element for cutting off the power to the PTC element.

The aim of the present invention is the realization of a refrigerator with a motor wherein the PTC is controlled depending on the variable environmental conditions.

In order to achieve this aim, the present invention proposes a refrigerator as defined in independent claim 1. Further embodiments of the invention are claimed in the dependent claims.

The motor that is part of the refrigerator according to the invention, explicated in the first claim and the respective claims thereof, comprises a control unit that deactivates the PTC element, serially connected to the auxiliary windings, after a variable time period depending on the mains voltage. Thus, the energy consumed on the PTC element is kept at the most optimum value by taking into consideration the motor characteristic affected by the mains voltage.

In this embodiment of the present invention, a look up table is uploaded in the memory of the control unit wherein the activation durations of the PTC element that changes depending on the mains voltage are entered. Accordingly, when the motor is operated, the activation duration of the PTC element is determined according to the measured mains voltage and the PTC element is deactivated at the end of this duration. Consequently, both the motor is started up reliably and also the PTC element is active for as long as necessary.

In this embodiment, the motor is used in a compressor provided in the refrigeration system of refrigerators for maintaining the activation of the refrigerant. In this embodiment, the refrigerator comprises a thermostat. When the thermostat is actuated, the motor starts operating and the control unit measures the mains voltage, deactivating the PTC element after the duration corresponding to the measured voltage and the motor continues to operate normally. In a refrigerator with an electronic thermostat, the use of a control unit is not required just to control the PTC element, and the available electronically controlled thermostat is easily integrated with the control unit. Consequently, both the total costs are lowered and also the energy that will be consumed by a separate control circuit is saved.

By means of the present invention, the activation duration of the PTC element is controlled depending on the motor characteristics affected by the variations in the mains voltage. Accordingly, the PTC element is activated for as long as necessary depending on the mains voltage, in other words for as long as the motor can start up.

A motor realized in order to attain the aim of the present invention is illustrated in the attached drawings, where:
Figure 1 - is the schematic view of an example of a motor and a control unit.
Figure 2 - is the schematic view of a motor and a control unit in an embodiment of the present invention.

The elements illustrated in the figures are numbered as follows:
1. Motor
2. Switch
3. Control unit
4. PTC element
5. Switching element
6. Power source

The motor (1) of the present invention is driven by a power source (6). The motor (1) comprises a main winding (MW), an auxiliary winding (AW), a common terminal (C) wherein one of the ends of these two windings (MW and AW) are connected to each other and a switch (2) that starts, stops the motor (1).

The motor (1) furthermore comprises a PTC (Positive Temperature Coefficient) element (4) connected serially to the auxiliary winding (AW) that is activated at the start-up moment so that the motor (1) can be operated, a switching element (5) serially connected to the PTC element (4), a capacitor that is connected in parallel to the PTC element (4) and the switching element (5) and a control unit (3), with one end connected to the switching element (5) and the other end to the common terminal (C).

The control unit (3) measures the mains voltage when the motor (1) operates and triggers to open the switching element (5) after a time period determined dynamically with respect to the mains voltage and cuts off the current, deactivating the PTC element (4).

The motor (1) characteristics are considerably affected by the mains voltage. The variations in the mains voltage not only can prolong the elapsed time period for the start-up of the motor (1) but also can be shortened hence causing the activation duration of the PTC element (4) to be variable with respect to the mains voltage. By means of the present invention, the activation duration of the PTC element (4) changes depending on the differences in the mains voltage. This maintains the energy consumption on the PTC element (4) to be kept at the most optimum value with respect to the mains voltage.

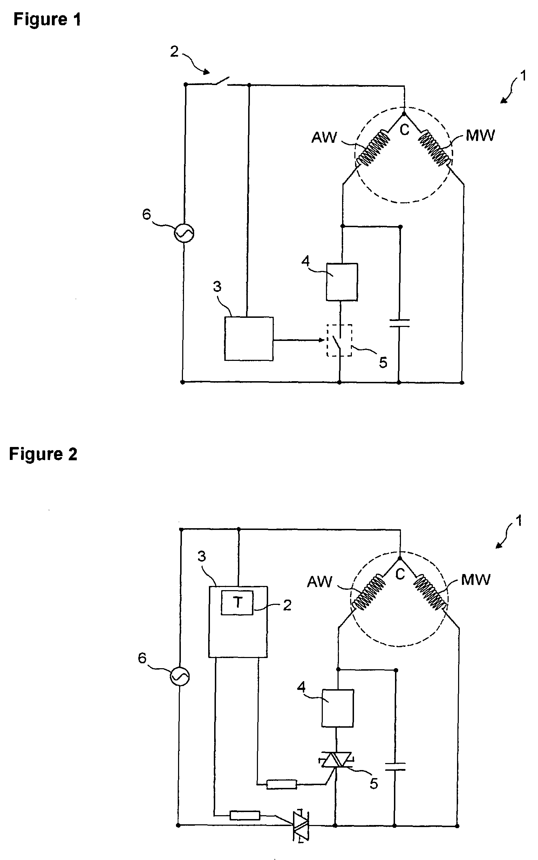

The common terminals of the PTC element (4), the switching element (5) and the capacitor connected in parallel to these and one end of the main winding (MW) are connected to each other and the resulting terminal is connected to the power source (6) thus completing the circuit (Figure 1). Accordingly, a look up table is recorded in the memory of the control unit (3) containing the mains voltage values and activation durations of the PTC element (4) determined with respect to the mains voltage values. When the motor (1) is operated by closing the switch (2), the duration corresponding to the mains voltage is found by the control unit (3) from the look up table and after the motor (1) starts operating the switching element (5) is opened at the end of this duration preventing passage of current through the PTC element (4). Consequently, energy consumption of the PTC element (4) is prevented since the PTC element (4) is deactivated.

In this example, the switch (2) is connected between the common terminal (C) and the power source (6). The motor (1) starts operating when the switch (2) is closed. When the motor (1) operates, current passes through the switching element (5) and the PTC element (4) serially connected thereto. In this status, the PTC element (4) is active. When the motor (1) starts operating, simultaneously the mains voltage is measured by the control unit (3). The activation duration of the PTC element (4) is determined from the look up table according to the measured mains voltage. The switching element (5) remains closed until this duration is completed and the motor (1) is enabled to start up by passing the current through the PTC element (4). When the duration is completed, the switching element (5) is opened and the circuit is cut off preventing the current from passing through the PTC element (4). Thus, the PTC element (4) is deactivated. Therefore, the motor (1) completes the start-up and continues to operate normally. By means of this embodiment, the PTC element (4) is active until the start-up of the motor (1) is completed and since the PTC element (4) is deactivated when the motor (1) proceeds into normal operating period after completing the start-up, thereby unnecessary consumption of energy thereon is prevented.

In an embodiment of the present invention, electronic circuit elements such as the triac, relay etc. are used as the switching element (5) and the switch (2) Moreover, the control unit (3) can either be made up of digital circuit elements or analog circuit elements that generate different triggering signals depending on the mains voltage.

The motor (1) of the present invention is used in a compressor maintaining the circulation of the refrigerant in the refrigeration system of a refrigerator comprising preferably an electronic thermostat used as the switch (2). In this embodiment, the control unit (3) controls both the switch (2) and the switching element (5). Accordingly, when the refrigerator is at the suitable temperature, the thermostat is triggered and the compressor motor (1) is operated by the control unit (3). Simultaneously, the mains voltage is measured by the control unit (3). The activation duration of the PTC element (4) in the look up table recorded in the control unit (3) is determined according to the measured voltage. The switching element (5) remains closed until this duration is completed and the motor (1) is started up by passing the current through the PTC element (4). The switching element (5) is opened when the duration is completed and the current passing through the PTC element (4) is interrupted by cutting off the circuit (Figure 2). Accordingly, the PTC element (4) is thus deactivated. In this case, the motor (1) completes its start-up and proceeds with normal operation. In a refrigerator with an electronic thermostat, the use of a control unit (3) is not required just to control the PTC element (4), and the available electronically controlled thermostat control unit can be used. Consequently, both the total costs are lowered and also the energy that a separate control circuit will consume is saved.

By means of the present invention, the energy consumed by the PTC element (4) is kept at the most optimum value by taking into consideration the motor (1) characteristics affected by the mains voltage. Accordingly, the PTC element (4) is activated for as long as necessary depending on the mains voltage.

## Claims

1. A refrigerator comprising a compressor that maintains circulation of the refrigerant in the refrigeration system and a motor (1) that comprises a power source (6), a main winding (MW), an auxiliary winding (AW), a common terminal (C) wherein one of the ends of these two windings (MW and AW) are connected to each other, a switch (2) that starts, stops the motor (1), a PTC element (4) connected serially to the auxiliary winding (AW) that is activated at the start-up moment so that the motor (1) can start-up, a switching element (5) serially connected to the PTC element (4), a capacitor that is connected in parallel to the PTC element (4) and the switching element (5) and a control unit (3) with one end connected to the switching element (5) and the other end to the common terminal (C) and **characterized by**
- the control unit (3) being configured to control both the switch (2) and the switching element (5), being configured to measure the mains voltage when the motor (1) operates,
- being configured to trigger to open the switching element (5) after a time period determined dynamically with respect to the mains voltage,
- being configured to cut off the current, thus deactivating the PTC element (4) and
- a thermostat being used as the switch (2).

2. A refrigerator as in Claim 1, **characterized by** a control unit (3) wherein a look up table is recorded in the memory containing the mains voltage values and activation durations of the PTC element (4) determined with respect to the mains voltage values.

3. A refrigerator as in Claim 1 or 2, **characterized by** electronic circuit elements such as the triac, relay etc. used as the switch (2) and/or the switching element (5).

4. A refrigerator as in Claim 1, **characterized by** a control unit (3) comprised of analog circuit elements that generate different triggering signals depending on the mains voltage.

## Patentansprüche

1. Kühlschrank, umfassend einen Kompressor, der die Zirkulation des Kältemittels im Kühlsystem aufrechterhalt, und einen Motor (1), der eine Leistungsquelle (6), eine Hauptwicklung (MW), eine Hilfswicklung (AW), einen gemeinsamen Anschluss (C), wobei eins der Enden der zwei Wicklungen (MW und AW) miteinander verbunden sind, einen Schalter (2), der den Motor (1) startet/anhält, ein PTC-Element (4), das in Reihe mit der Hilfswicklung (AW) verbunden ist, die zum Zeitpunkt des Starts aktiviert wird, damit der Motor (1) starten kann, ein Schaltelement (5), das in Reihe mit dem PTC-Element (4) verbunden ist, einen Kondensator, der parallel mit dem PTC-Element (4) und dem Schaltelement (5) verbunden ist, und eine Steuereinheit (3), deren eines Ende mit dem Schaltelement (5) und deren anderes Ende mit dem gemeinsamen Anschluss (C) verbunden ist, umfasst und **dadurch gekennzeichnet, dass**
- die Steuereinheit (3) dazu konfiguriert ist, sowohl den Schalter (2) als auch das Schaltelement (5) zu steuern, und dazu konfiguriert ist, die Netzspannung zu messen, wenn der Motor (1) in Betrieb ist,
- dazu konfiguriert ist, auszulösen, um das Schaltelement (5) nach einem dynamisch festgelegten Zeitraum in Bezug auf die Netzspannung zu öffnen,
- dazu konfiguriert ist, den Strom zu unterbrechen und dadurch das PTC-Element (4) zu deaktivieren, und
- ein Thermostat als der Schalter (2) benutzt wird.

2. Kühlschrank nach Anspruch 1, **gekennzeichnet durch** eine Steuereinheit (3), wobei eine Nachschlagtabelle, die im Speicher aufgezeichnet ist, die Netzspannungswerte und Aktivierungszeitspannen des PTC-Elements (4) enthält, die in Bezug auf die Netzspannungswerte bestimmt werden.

3. Kühlschrank nach Anspruch 1 oder 2, **dadurch gekennzeichnet, dass** elektronische Schaltkreiselemente wie etwa das Triac, Relais usw. als der Schalter (2) und/oder das Schaltelement (5) benutzt werden.

4. Kühlschrank nach Anspruch 1, **gekennzeichnet durch** eine Steuereinheit (3), die aus analogen Schaltkreiselementen gebildet ist, die abhängig von der Netzspannung unterschiedliche Auslösesignale erzeugen.

## Revendications

1. Un réfrigérateur comprenant un compresseur qui assure la circulation du fluide frigorigène dans le système de réfrigération et un moteur (1) qui comprend une source d'alimentation (6), un enroulement principal (MW), un enroulement auxiliaire (AW), une borne commune (C) où l'une des extrémités de ces deux enroulements (MW et AW) sont reliés l'un à l'autre, un commutateur (2) qui démarre/arrête le moteur (1), un élément CTP (4) relié en série à l'enroulement auxiliaire (AW) qui est activé au moment de démarrage de telle sorte que le moteur (1) peut démarrer, un élément de commutation (5) relié en série à l'élément CTP (4), un condensateur qui est relié en parallèle à l'élément CTP (4) et à l'élément de commutation (5), et une unité de commande (3) dont l'une extrémité est reliée à l'élément de commutation (5) et l'autre extrémité est reliée à la borne commune (C) et **caractérisé par**
- l'unité de commande (3) configurée pour commander à la fois le commutateur (2) et l'élément de commutation (5), configurée pour mesurer la tension du réseau lorsque le moteur (1) fonctionne,
- configurée pour se déclencher afin d'ouvrir l'élément de commutation (5) après une période de temps déterminée dynamiquement par rapport à la tension du réseau,
- configurée pour couper le courant, donc désactivant l'élément CTP (4) et
- un thermostat utilisé comme le commutateur (2).

2. Un réfrigérateur selon la Revendication 1, **caractérisé par** une unité de commande (3) où une table de correspondance est enregistrée dans la mémoire contenant les valeurs de la tension du réseau et les durées d'activation de l'élément CTP (4) déterminées par rapport aux valeurs de la tension du réseau.

3. Un réfrigérateur selon la Revendication 1 ou 2, **caractérisé par** des éléments de circuit électronique comme le triac, le relais, etc. utilisés comme le commutateur (2) et/ou l'élément de commutation (5).

4. Un réfrigérateur selon la Revendication 1, **caractérisé par** une unité de commande (3) composée d'éléments de circuit analogique qui génèrent des signaux différents de déclenchement en fonction de la tension du réseau.
